# EUROPEAN PATENT APPLICATION

(11) **EP 4 796 435 A2**
(43) Date of publication of application: **26.08.2026**
(21) Application number: 26158892.5
(22) Date of filing: 16.02.2026
(51) Int. Cl.: B64C 3/56, B64C 9/24, B64C 23/06

(54) **HIGH LIFT ARRANGMENT FOR AN AIRCRAFT WING**

(30) Priority: 20.02.2025 GB 202502498
(71) Applicant: Airbus Operations Ltd, Filton, Bristol BS34 7 (GB)
(72) Inventor: DURSTON, Nicholas, Bristol, BS34 7PA (GB); COMMIS, Ben, Bristol, BS34 7PA (GB); CLARK, Timothy, Bristol, BS34 7PA (GB)
(74) Representative: Mathys & Squire

(57) **Abstract**

A high lift arrangement for a folding aircraft wing having a wing body with a folding wing tip comprising a high lift element arranged to have a deployed position in front of the leading edge of the folding wing tip, and an actuator for deploying the element. The actuator is mounted to the wing body such that there is no need for electrical or hydraulic cables to cross the wing fold line.

## Description

### FIELD OF THE INVENTION

This invention relates to high lift arrangements for aircraft wings, and in particular to improvements of the high lift performance of a wing tip of an aircraft wing, for example a swept wing tip and/or a folding wing tip. More specifically, the invention may relate to a high lift arrangement for an unprotected wing tip; that is, a wing surface without a slat or flap or other high lift device for protecting the wing against stall.

### BACKGROUND TO THE INVENTION

Aircraft wings may be provided with one or more high lift devices for increasing the lift provided by the wing and/or delay the onset angle of attack of stall. Many different kinds of high lift devices exist, including flaps and slats, of which there are many variations, as well as other devices such as vortillons, vortex generators and nacelle strakes, which are well known in the art.

For example, aircraft wings are commonly provided with flaps at the trailing edge of the wing and/or slats at the leading edge. The flaps and slats are movable in relation to the remainder of the wing in order to change the wing configuration which alters the shape and relative positions of the lifting surfaces (eg the wing, slat and flap) to change the aerodynamic characteristics of the wing. The high lift devices are generally hydraulically powered, and may be controlled electrically by a cable running along the wing to a hydraulic actuator, in order to increase the lift produced by the wing at low speeds. In particular, slats at the leading edge of the wing may move downwardly when deployed, or may be deployed forwardly and downwardly of the leading edge.

High lift devices such as flaps and slats provided on a wing generally require high voltage cables and/or hydraulic lines or hoses to operate actuators for deploying the devices. Where the wing tip is foldable, for example in order to reduce the wing span of an aircraft on the ground, such cables, hoses or pipes would have to pass across the fold in order to provide such devices on the foldable wing tip, which may be inconvenient and may increase complexity and cost.

Alternatively, if no such devices are provided on the wing tip, performance and handling qualities may be compromised and could lead to undesirable low speed performance. For example, this could cause an issue for a take-off where one engine is inoperative, where one wing tip may stall prematurely and cause roll under low power.

The invention aims to address these issues.

### SUMMARY OF THE INVENTION

According to the present invention, there is provided a high lift arrangement for an aircraft wing, wherein the wing comprises a wing body and a wing tip foldable relative to the wing body, the arrangement comprising: a high lift element arranged to have a deployed position in front of the leading edge of the wing tip; and an actuator for deploying the element, wherein the actuator is mounted to the wing body.

Thus a high lift device may be provided for the wing tip portion of the wing which does not require equipment such as electrical cables and/or hydraulic lines or hoses to pass across a hinge between the wing body and the wing tip, since the actuator is mounted inboard of the hinge.

The element may have a stowed position in which it is at least partially within the wing body, including in a slat of the wing body, or at least partially within the wing tip, or at least partially within both the wing body and the wing tip.

For example, the element may be housed in the wing body and deployable in a spanwise direction from the wing body, optionally to extend parallel to a leading edge of the wing body when deployed. This may be by linear or rotary movement of the element. Thus the actuator may be a linear actuator or rotary actuator.

The element may be supported at or adjacent an inboard part thereof, optionally only at or adjacent an inboard part thereof. The support may be provided on the wing body, optionally only on the wing body. The actuator may be connected to the element at or adjacent the inboard part of the element.

The wing body may have a first sweep angle, and the wing tip may have a second sweep angle greater than the first sweep angle. The element may have a third sweep angle less than the second sweep angle, and preferably substantially the same as the first sweep angle. Thus the element may form a gap with the wing tip leading edge which increases in an outboard direction. This arrangement can generate a vortex from the outboard tip of the high lift element which increases the flow speed over an upper surface of the wing tip thus improving low speed performance of the wing.

The element may have a retracted position at least partially within the wing body, preferably within a nose portion of the wing body. For example, the element may have a retracted position within a slat of the wing body. Alternatively, the element may have a retracted position within the wing tip.

In some examples, at least a part of the element is located inboard of the hinge arrangement, and at least a part of the element is located outboard of the hinge. The element may be detachable from the actuator, for example when the wing tip is folded in relation to the wing body.

Optionally, the wing body is provided with a slat, and deployment of the slat may cause deployment of the element. The element may for example comprise a slat extension mounted within the slat and deployed out of the slat in a substantially spanwise outboard direction and/or in an outboard direction parallel to the leading edge of the wing body.

According to another aspect, there is provided a high lift arrangement for an aircraft wing, wherein the wing comprises a high lift element extendable from a leading edge thereof, and wherein a secondary high lift element is deployable in a spanwise direction from the high lift element.

The secondary element may be deployable upon deployment of the high lift element.

According to another aspect of the invention, there is provided a high lift arrangement for an aircraft wing, wherein the wing comprises a wing body and a wing tip, the arrangement comprising a high lift element arranged to have a deployed position wherein the high lift element extends in front of at least an inboard portion of a leading edge of the wing tip, with the high lift element having a sweep angle which is less than a sweep angle of the wing tip.

With this arrangement, the high lift element may form a gap with the wing tip leading edge which increases in an outboard direction. A vortex may be generated from the outboard tip of the high lift element, and the gap may act to accelerate the flow locally, which can increase the flow speed over an upper surface of the wing tip thus improving low speed performance of the wing.

For example, the wing body may have a first sweep angle and the wing tip may have a second sweep angle which is greater than the first sweep angle, with the high lift element having a third sweep angle which is less than the second sweep angle.

Conveniently, the third sweep angle is substantially the same as the first sweep angle, such that the deployed element extends in a direction parallel to the leading edge of the wing body. In this case, the high lift element may be deployed spanwise from the wing body.

In the deployed position, the element may be supported at or adjacent a proximal end thereof, preferably only at or adjacent the proximal end. Thus a support may be provided on the wing body.

The arrangement may comprise an actuator for deploying the element, the actuator preferably being connected to the element at or adjacent a proximal end of the element. Thus the actuator may be provided in the wing body, including in the slat of the wing body.

The wing may comprise a hinge arrangement arranged to fold the wing tip relative to the wing body. In this case, housing the actuator in the body has the advantage that the actuator is inboard of the fold line, such that it is not necessary to pass power across the fold.

The element may be deployed by linear movement of the element in a spanwise direction, which may be parallel to the leading edge of the wing body. Alternatively the element may be deployed by rotational movement of the element. For example, the element may rotate about a position on or adjacent a hinge line.

The element may have a retracted position within the wing body, preferably within a nose portion of the wing body. For example, the element may have a retracted position within a slat of the wing body. Alternatively, the element may have a retracted position within the wing tip.

Conveniently, the high lift element may have a constant cross section.

The element may comprise at least one vortex generating member, such as a fence or vane. The leading edge of the element may be a serrated edge. The element may have an end plate at or adjacent the outboard end thereof.

References herein to an aircraft wing are intended to encompass flying wings as well as wings which are or are intended to be attached to a fuselage.

### BRIEF DESCRIPTION OF THE DRAWINGS

In order that the invention may be more readily understood, reference will now be made, by way of example, to the accompanying drawings, in which:
Figure 1 is a schematic plan view of a wing having a folding wing tip and a high lift arrangement for the wing tip according to an example;
Figure 2 is a schematic plan view of a wing having a high lift arrangement according to another example;
Figure 3 is a schematic plan view of a wing having a hight lift arrangement according to a further example;
Figure 4 is a schematic plan view of a wing having an alternative lift arrangement;
Figure 5 is a schematic plan view of a wing having an alternative lift arrangement;
Figures 6A and 6B are schematic front views of the wing of Figure 4 or 5;
Figure 7 is a schematic plan view of a wing having yet another high lift arrangement; and
Figure 8 is a schematic perspective view of a wing having an alternative high lift arrangement.

### DETAILED DESCRIPTION OF THE DRAWINGS

As discussed above, aircraft wings are commonly provided with slats which may be deployable forwardly and downwardly from the leading edge of the wing to increase the effective camber of the wing, improving aerodynamic performance at low speeds. Operation of the slats commonly requires electrical and/or hydraulic power for powering actuators for moving the slats between a stowed and a deployed position, usually provided by cables housed in the wing profile.

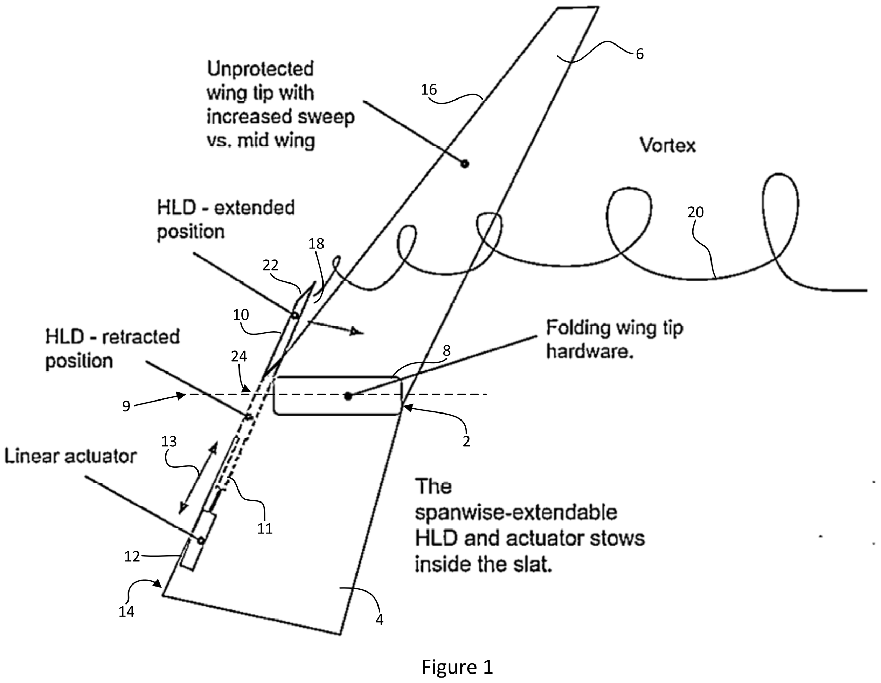

Referring to Figure 1, an aircraft wing 2 has a wing body 4 and a wing tip 6. The wing tip 6 may have an increased sweep angle compared to sweep angle of the wing body 4. A folding mechanism 8 may be provided for allowing folding movement of the wing tip 6 about a fold axis or region 9. For example the wing tip 6 may be movable between a folded position in which the wing tip 6 extends upwardly and substantially perpendicularly to the wing body 4, and an unfolded position in which the wing tip 6 extends along substantially the same plane as the wing body 4.

The folding mechanism 8 may include a hinge mechanism and an actuator for causing relative movement of the wing tip 6 with respect to the wing body 4, as is well known in the art. This can allow for a greater wing span of the aircraft in flight, whilst also allowing the wing span to be reduced on the ground, for example where space is limited.

The wing body 4 may be provided with a high lift device (not shown) in the form of a slat which can be stowed or deployed as required, as is well known in the art. Reference to the wing body includes a wing body with or without a slat. A high lift device for the wing tip 6 may be provided by an elongate slat-like element 10 housed within the leading edge 14 of the wing body 4 near the fold axis 9 when in a stowed position. The element 10 may for example be housed within the leading edge structure, known as the D-nose, or within a slat provided on the leading edge 14 of the wing body 4.

The element 10 is deployable by a linear actuator 12 also housed within the wing profile of the wing body 4, which may include a slat of the wing body, adjacent the leading edge 14 of the wing body 4 and inboard of the element 10. The linear actuator 12 may be attached to an inboard or proximal end 11 of the element 10. Operation of the actuator 12 can thus extend and retract the element 10 in a substantially spanwise direction in a linear fashion along the length of the element 10 as shown by the arrow 13 in Figure 1. The element 10 may have a substantially constant cross section to allow for ease of extension and retraction.

In an extended position as shown in solid lines in Figure 1, the element 10 extends substantially parallel to the wing body 4 and outboard of the wing body 4. The element 10 therefore is positioned in front of the leading edge 16 of the wing tip 6, with a gap 18 between the element 10 and the leading edge 16 which increases outwardly from the fold axis or region 9.

In this extended position, the element 10 may improve high-lift flow behaviour by (i) accelerating the flow through the gap between the element 10 and the wing tip 6, and (ii) the generation of a vortex 20 emanating from a distal end or tip 22 of the element which may energise the boundary layer on the upper surface of the wing tip 6 to delay the onset of flow separation and stall, and generate additional lift. This may work in a manner similar to an alula of a bird's wing, to enhance lift and delay stall at high angles of attack and/or low speeds. For example, the vortex may modify the turbulence on the upper surface of the wing, delaying flow separation.

Since the actuator 12 is provided in the wing body 4, no cables are required to cross the fold line 9 in order to provide the high lift device operating with the wing tip 4.

When not required, the element 10 may be withdrawn into the stowed position in the wing body 4, as shown in broken lines in Figure 1, by reverse operation of the actuator as shown by the arrow 13.

The element 10 may include various further features to enhance operation. For example, it may include vanes or vortex generators, or it may have serrated upper and/or lower edges to assist with energising the downstream flow. The distal end 22 of the element 10 may be shaped, for example having an end plate for maintaining a flush finish with an outward end 24 of the wing body leading edge 12 or slat in which it is housed when retracted, and/or to promote activation of the vortex 20. A navigation light could be incorporated in the element 10 if required. Extension of the element 10 could also act to dislodge ice formation immediately outboard of the fold line 9. The element 10 could carry bleed air arranged to be released over the wing tip 6 to assist in de-icing the wing tip 6.

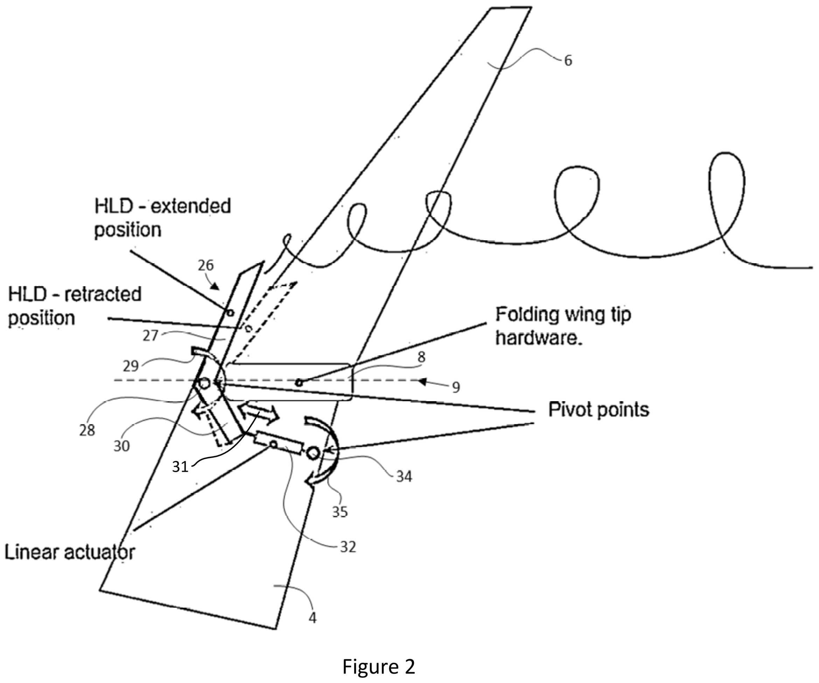

Referring now to Figure 2, an alternative high lift arrangement is shown on a wing similar to that shown in Figure 1 having a wing body 4 and a wing tip 6. This arrangement comprises a high lift device for the wing tip 6 comprising an element 26 which is mounted for rotary motion in order to extend or retract the element 26 in front of the leading edge 16 of the wing tip 6. The element 26 can be rotated into a deployed position in front of the leading edge 16 of the wing tip 6, as shown in solid lines, acting in a similar way to the linear element 10 shown in Figure 1. The extension and retraction of the element 26 in this case is effected by rotation about a pivot point 28 on the wing body 4 substantially at or adjacent the hinge line or region 9, as shown by the arrow 29.

The element 26 has a shorter actuating part 30 extending from the pivot point 28 at an obtuse angle to the element 26. The actuating part 30 is provided with a linear actuator 32 which operates to push or pull the actuating part 30 in the direction shown by the arrow 31, which causes the element 26 to pivot between an extended position and a retracted position shown in broken lines, in which the element 26 is stowed at the leading edge 44 of the wing tip 6, for example in the D-nose of the wing tip 6. The actuating part 30 and actuator 32 may be housed within the wing body 4, and the actuator 32 is mounted to the wing body 4 about a second pivot point 34 so as to be rotatable as shown by arrow 35 in operation.

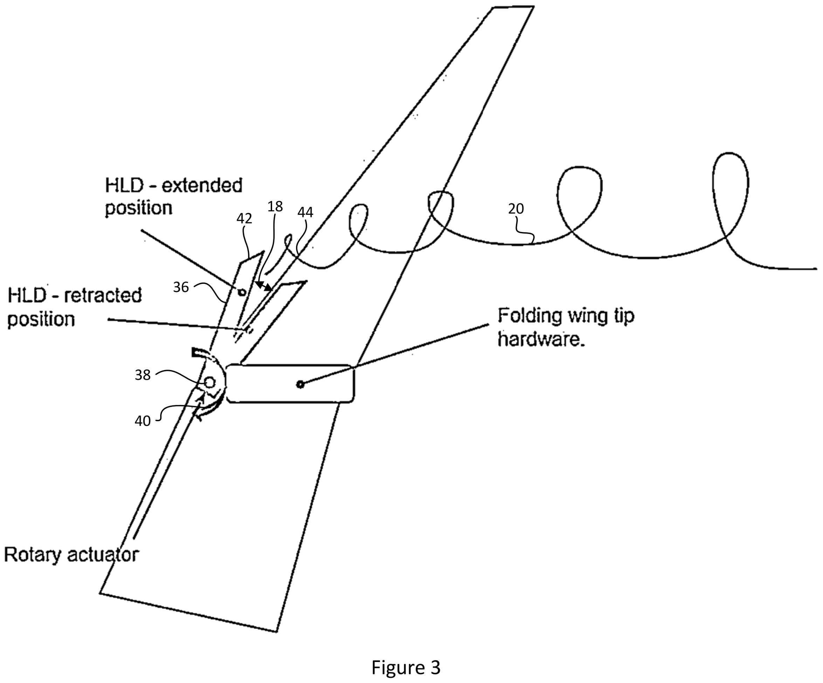

Figure 3 shows a further example, in which an element 36 may be extended in front of the wing tip 6 and retracted into the leading edge 16 of the wing tip 6 in a similar manner to that shown in Figure 2. In this example, a rotary actuator 38 is used to extend and retract the element 36. The element 36 is attached to the rotary actuator 38 adjacent a proximal or inboard end 40 of the element 36, for rotation about the proximal end 40, such that the distal end 42 of the element 36 moves between a retracted position within the profile of the wing tip 6 and an extended position in front of the leading edge 44 of the wing tip 6.

As with the embodiment of Figure 2, the element 36 when deployed forms a gap 18 with the leading edge 44 which increases in an outboard direction, from the distal 42 to the proximal 44 end of the slat 36, so as to generate a vortex 20 over the upper surface of the wing tip 6. The gap 18 may accelerate the flow between the element 36 and the wing tip leading edge 44, and a vortex 20, which may arise from the pressure difference between upper and lower surfaces of the element 36, passes over the upper surface of the wing tip 6, and can help delay stall and increase lift of the wing tip.

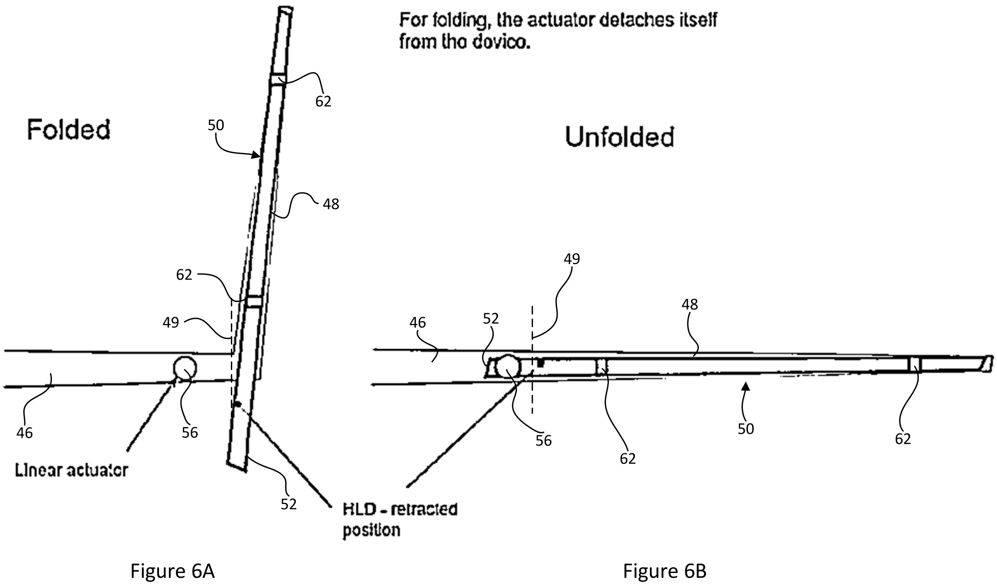

In the example of Figure 1, the element is housed in the wing body when retracted. However, in the case of the examples shown in Figures 2 and 3, it can be seen that in the retracted position, at least a part of the element is positioned in the wing tip 6. Therefore, where the wing tip is a folding wing tip, the slat may be detachable from the actuator to allow for the wing tip to fold, as discussed in further detail in relation to Figure 6.

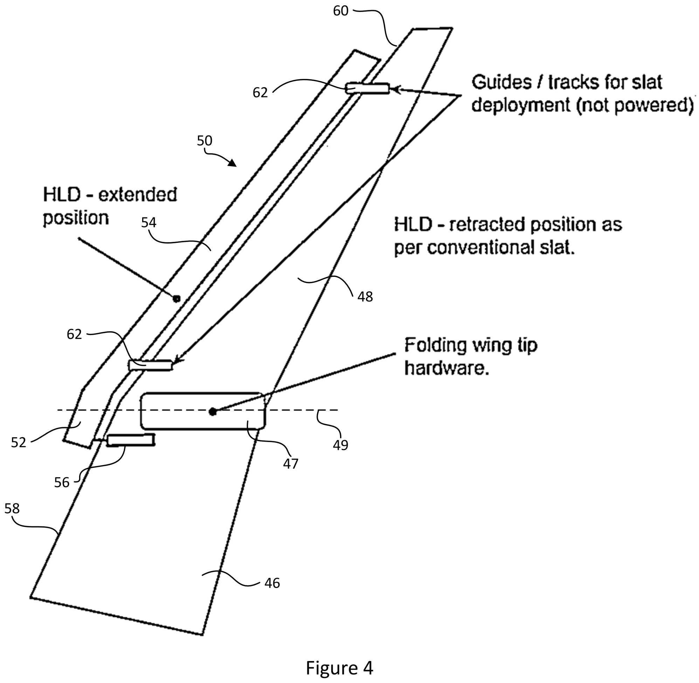

Figure 4 shows another example of a high lift arrangement for a wing with a wing body 46 and a wing tip 48 having a greater sweep angle than the wing body, wherein the wing tip 48 may be connected to the wing body 46 by a fold or hinge arrangement 47 for folding along a hinge axis 49. A high lift element 50 has a short inboard or proximal part 52 and a longer outboard or distal part 54, each part extending along and substantially parallel to the leading edge 58, 60 of the wing body 46 and wing tip 48 respectively, such that the element 50 has a bent shape. The outboard part 54 is arranged to act as a high lift device for the wing tip 48.

An actuator 56 is provided in the wing body 46 and attached to the inboard part 52 of the element 50 adjacent the leading edge 58 of the wing body 46. The actuator is a linear actuator having an actuation direction which may be substantially parallel to a forward direction of the aircraft, and/or the hinge arrangement 47.

The wing tip 48 comprises guide tracks 62 extending parallel to the actuation direction of the linear actuator 56 so as to guide movement of the element 50 towards and away from the leading edge 60 of the wing tip 48. Upon actuation to deploy the element 50, the element moves away from the wing to a position in front of the leading edges 58, 60, to a position as shown in Figure 4. In order to stow the element 50, the actuator 56 operates in the opposite direction to withdraw the element 50 back towards the wing. Thus the element 50 may function as a high lift device as is well known in the art.

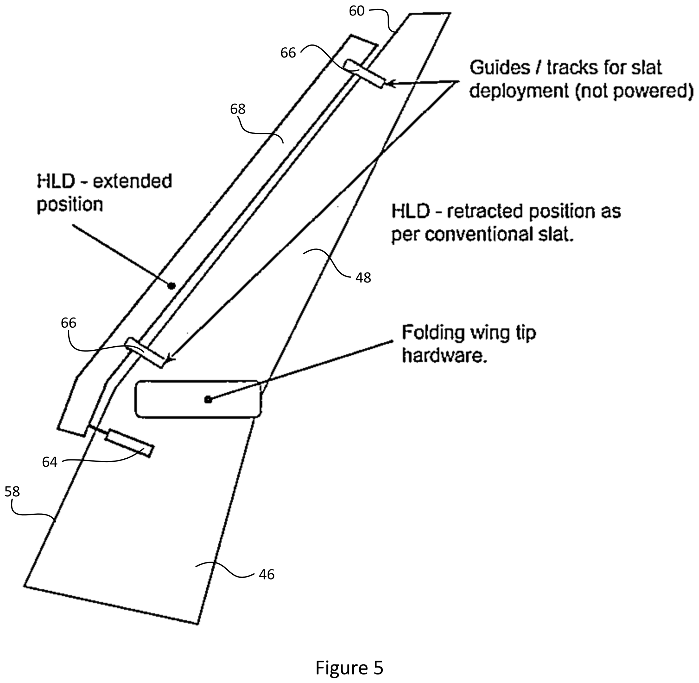

As shown in Figure 5, alternatively an actuator 64 may instead act in a direction substantially perpendicular to the leading edge 58 of the wing body 46. In this case, the guide tracks 66 are similarly provided extending substantially perpendicular to the leading edge in order to guide movement of the slat 68. Thus the element 68, which is similar to the element 50 shown in Figure 4, is deployable in front of the wing tip 48 in a direction perpendicular to the leading edge 60 to act as a high lift device, as is also well known in the art.

Referring to Figures 6A and 6B, where the wing tip 48 is foldable in relation to the wing body 46, the high lift element 50 may be detachable from the actuator 56 so as to allow the inboard part 52 of the element 50, which is positioned inboard of the hinge line 49, to move away from the actuator 56 as the wing tip 48 folds upwardly, as shown in Figure 6A. In the folded position, the inboard part 52 extends downwardly from the wing, in line with the upwardly folded wing tip 48. Upon unfolding, as shown in Figure 6B, the inboard part 52 may be attached to the actuator 56 for deployment as required.

Similarly, the elements 26 and 36 shown in Figures 2 and 3 have at least a part which is mounted to the wing tip 6, and may be detachable from their respective actuators in a similar manner as described above if required in order to fold the wing.

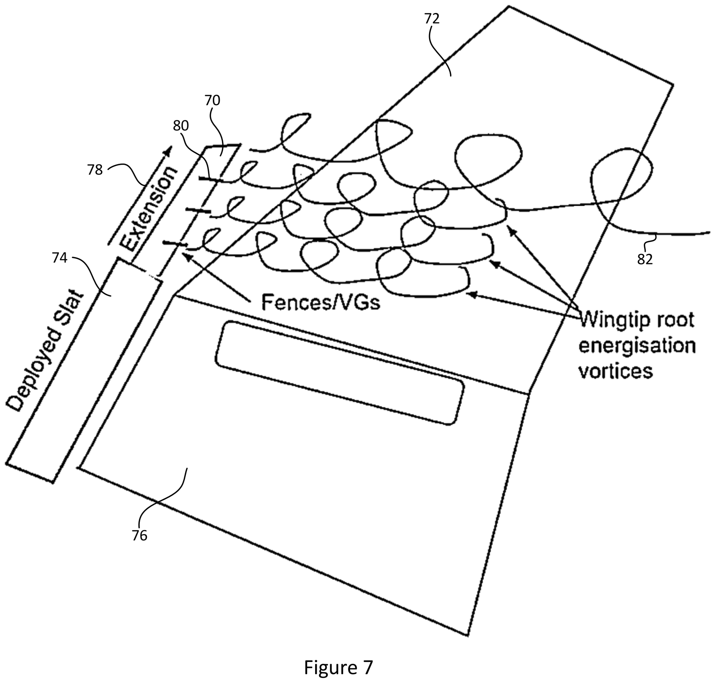

Another example is shown in Figure 7, which shows a wing body 76 and a folding wing tip 72 with a greater sweep angle than the wing body 76. In this example a high lift device for the wing tip 72 is provided by a secondary high lift element in the form of a slat extension 70. The slat extension 70 is housed within a wing body slat 74 provided on the wing body 76 when stowed, and is deployable in front of the wing tip 72 from within a wing body slat 74. When the wing body slat 74 is deployed, the slat extension 70 may extend outwardly from the deployed wing body slat 74, for example by movement in a direction parallel to the wing body slat 74, as shown by the arrow 78. The slat extension 70 may be moved in the opposite direction to stow the slat extension 70 within the wing body slat 74 when not required.

This may be achieved for example using a mechanical linkage between the main wing body 76, the wing body slat 74, and the extension 70, such that the element is moved as a slave device when the slat is extended.

The slat extension 70 may include fences or vanes 80 provided extending upwardly from an upper surface of the slat extension 70 and preferably being substantially aligned with a forward direction of the aircraft, and/or to be substantially aligned with the airflow in flight. In flight, the vanes 80 are arranged to create vortices 82 over the upper surface of the wing tip 72, which can further improve the aerodynamic performance of the wing tip 72 at low speeds.

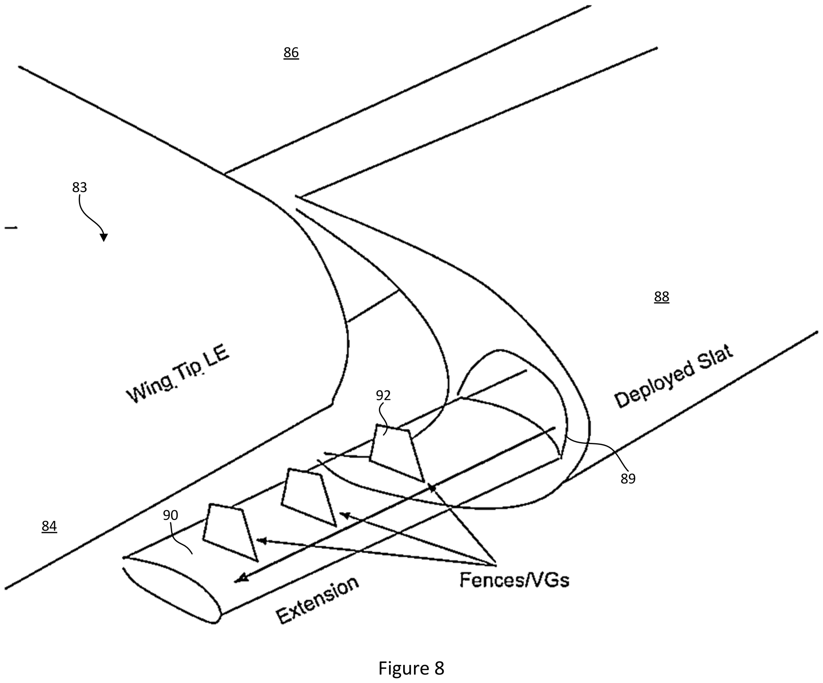

This slat extension device as described above may also be used with a wing tip which does not fold, and/or with a wing wherein the wing tip does not have a greater sweep angle than the wing body. An example of such a device is shown in Figure 8, in which the wing tip leading edge 84 is substantially parallel to the wing body 86 inboard of the wing tip 83. When a wing body slat 88 is deployed from the wing body 86, which may be in a well known or conventional manner for low speed flight, a slat extension 90 may be deployable from a position housed within an aperture or cavity 89 in the slat 88. The slat extension 90 may be deployed automatically when the wing body slat 88 is deployed, or may be deployable separately. The slat extension 90 may have fences or vanes 92 as described above.

## Claims

1. A high lift arrangement for an aircraft wing, wherein the wing comprises a wing body and a wing tip foldable relative to the wing body, the arrangement comprising: a high lift element arranged to have a deployed position in front of the leading edge of the wing tip; and an actuator for deploying the element, wherein the actuator is mounted to the wing body.

2. A high lift arrangement as claimed in claim 1, wherein the element has a stowed position which is: at least partially within the wing body, at least partially within the wing tip, or at least partially within both the wing body and the wing tip.

3. A high lift arrangement as claimed in claim 1 or 2, wherein the element is housed at least partially in the wing body and is arranged to be deployable in a spanwise direction from the wing body, optionally to extend parallel to a leading edge of the wing body when deployed.

4. A high lift arrangement as claimed in claim 1, 2 or 3, wherein the actuator is one of a linear actuator and a rotary actuator.

5. A high lift arrangement as claimed in any preceding claim, wherein the actuator is connected to the element at or adjacent an inboard part of the element, optionally only to an inboard part of the element.

6. A high lift arrangement as claimed in any preceding claim, wherein the element is detachable from the actuator.

7. A high lift arrangement as claimed in any preceding claim, comprising at least one guide member mounted on the wing tip for guiding movement of the element.

8. A high lift arrangement as claimed in any preceding claim, wherein the wing body has a first sweep angle, and the wing tip has a second sweep angle greater than the first sweep angle, the element having a third sweep angle less than the second sweep angle, and preferably substantially the same as the first sweep angle.

9. A high lift arrangement as claimed in any preceding claim, wherein the element forms a gap with the wing tip leading edge which increases in an outboard direction.

10. A high lift arrangement as claimed in any preceding claim, wherein the element has a retracted position at least partially within the wing tip.

11. A high lift arrangement as claimed in any preceding claim, wherein the element has a retracted position at least partially within the wing body, preferably within a nose portion of the wing body, optionally within a slat of the wing body.

12. A high lift arrangement as claimed in any preceding claim, wherein the wing body is provided with a slat, and the element comprises a slat extension mounted within the slat and deployable out of the slat in a substantially spanwise direction and/or substantially parallel to the leading edge of the wing body, optionally wherein deployment of the slat causes deployment of the element.

13. A high lift arrangement for an aircraft wing, wherein the wing comprises a high lift element extendable from a leading edge thereof, and wherein a secondary high lift element is deployable in a spanwise direction from the high lift element, optionally upon deployment of the high lift element.

14. An aircraft wing comprising a high lift arrangement as claimed in any preceding claim.

15. An aircraft having an aircraft wing as claimed in claim 14.
